# EUROPÄISCHE PATENTSCHRIFT

(11) **EP 0 667 664 B1**
(45) Veröffentlichungstag und Bekanntmachung des Hinweises auf die Patenterteilung: **25.03.1998**
(21) Anmeldenummer: 95100931.5
(22) Anmeldetag: 25.01.1995
(51) Int. Cl.: H02G 9/10

(54) **Gehäuse in Unterflurausführung für fernmeldetechnische Geräte**
Underground housing for telecommunication devices
Boîte souterraine pour appareils de télécommunication

(30) Priorität: 09.02.1994 DE 9402158 U; 06.07.1994 DE 9410777 U
(43) Veröffentlichungstag der Anmeldung: 16.08.1995
(73) Patentinhaber: ALCATEL ALSTHOM COMPAGNIE GENERALE D'ELECTRICITE, 75008 Paris (FR)
(72) Erfinder: Stieb, Werner, D-31655 Stadthagen (DE); Wenski, Wolfgang, D-31737 Rinteln (DE); Freckmann, Hans-Holger, D-30855 Langenhagen (DE); Wielgolaski, Zbigniew, D-31655 Stadthagen (DE); Kochsmeier, Günter, D-31655 Stadthagen (DE); Gerwald, Eberhard, D-31180 Giesen (DE); Wangerin, Heinz, D-31683 Obernkirchen (DE); Grajewski, Franz, Dr.-Ing., D-31655 Stadthagen (DE)
(74) Vertreter: Mende, Eberhard, Dipl.-Ing.

(56) Entgegenhaltungen:
- EP-A- 0 541 350
- DE-A- 3 322 584
- DE-A- 3 329 810

## Beschreibung

Die Erfindung betrifft ein Gehäuse in Unterflurausführung für fernmeldetechnische Geräte, insbesondere für elektronische Bauteile, bestehend aus einem mechanisch stabilen Gehäuse, welches mit einem abnehmbaren Gehäusedeckel verschlossen ist und einer innerhalb des stabilen Gehäuses angeordneten Einrichtung, welche zumindest ein fernmeldetechnisches Gerät trägt.

In den Kabelnetzen der Fernmeldetechnik werden Schalt- und Sicherungseinrichtungen für verschiedene Anwendungszwecke benötigt. So sind Kabelverteiler-Gehäuse für die Fernmeldetechnik und Schutzgehäuse der Kabelfernsehtechnik und für Fernwirkeinrichtungen bei Straßensignalanlagen z.B. im Straßenbild bekannt. Diese Gehäuse sind jedoch meistens oberirdisch auf einem Sockel stehend montiert. Sie werden auf Gehwegen häufig als Behinderung empfunden und stören das optische Erscheinungsbild. Darüber hinaus besteht eine hohe Wahrscheinlichkeit, daß sie durch Fahrzeuge beschädigt werden, was meistens zur Folge hat, daß die im Innern der Gehäuse befindlichen fernmeldetechnischen Geräte ihre Aufgabe nicht mehr erfüllen können.

Aus der DE-PS 33 22 584 ist ein Unterflurgehäuse bekannt, welches aus einem im Erdboden befindlichen Schacht mit einem abnehmbaren Deckel besteht. Im Innern des Schachtes sind die fernmeldetechnischen Einrichtungen untergebracht. Die fernmeldetechnischen Einrichtungen sind an einer schwenkbaren Montagewand montiert, die während der Montagearbeiten in eine vertikale Position herausgeklappt wird. Nach einer Alternative ist in dem Schacht ein wasserdichtes Gehäuse zur Aufnahme von feuchtigkeitsempfindlichen Einrichtungen untergebracht. Das wasserdichte Gehäuse ist um einen Drehpunkt schwenkbar und aus dem Schacht herausklappbar.

Der vorliegenden Erfindung liegt die Aufgabe zugrunde, einen Unterflurbehälter bereitzustellen, der insbesondere für elektronische Bauteile, d.h. für Einrichtungen der optischen Übertragungstechnik geeignet ist, der leicht zugänglich und wartungsfreundlich ist. Insbesondere sollen die empfindlichen elektronischen Bauteile gegen Beschädigungen durch Wärme und Feuchtigkeit geschützt sein.

Diese Aufgabe wird dadurch gelöst, daß die die fernmeldetechnischen Geräte tragende Einrichtung ein einen Behälterboden und eine Behälteraußenwand aufweisender topfartiger Behälter mit einem zylindrischen Einsatz ist, der unter Bildung eines Spaltes zwischen der Behälteraußenwand und dem Einsatz in dem topfartigen Behälter angeordnet ist, daß der Behälter mit einem abnehmbaren Behälterdeckel feuchtigkeitsdicht verschlossen ist und daß die fernmeldetechnischen Geräte in dem zylindrischen Einsatz angeordnet sind.

Ein wesentlicher Vorteil der Erfindung ist darin zu sehen, daß bei dem Unterflurbehälter eine Trennung von Statik und Dichtheit vorgenommen wurde. Während die Statik durch das mechanisch stabile Gehäuse, welches vorzugsweise ein Betonschacht ist, aufgebracht wird, wird die Dichtheit durch den verschließbaren Behälter gewährleistet. Ein weiterer wesentlicher Vorteil besteht darin, daß der Spalt zwischen dem topfartigen Behälter und dem zylindrischen Einsatz als Führung und Vorratsbehälter für die von unten kommenden Kabel dient. Da sich die empfindlichen Bauteile im Innern des zylindrischen Einsatzes befinden, sind sie gegen Kondensatbildung geschützt. Wegen der Verlustleistung der Bauteile wird die Temperatur im Innern des Einsatzes immer höher sein als die Temperatur der Behälteraußenwand, d.h. eine Kondensatbildung findet nur an der Behälteraußenwand statt.

Weitere vorteilhafte Ausgestaltungen der Erfindung sind in den Unteransprüchen erfaßt.

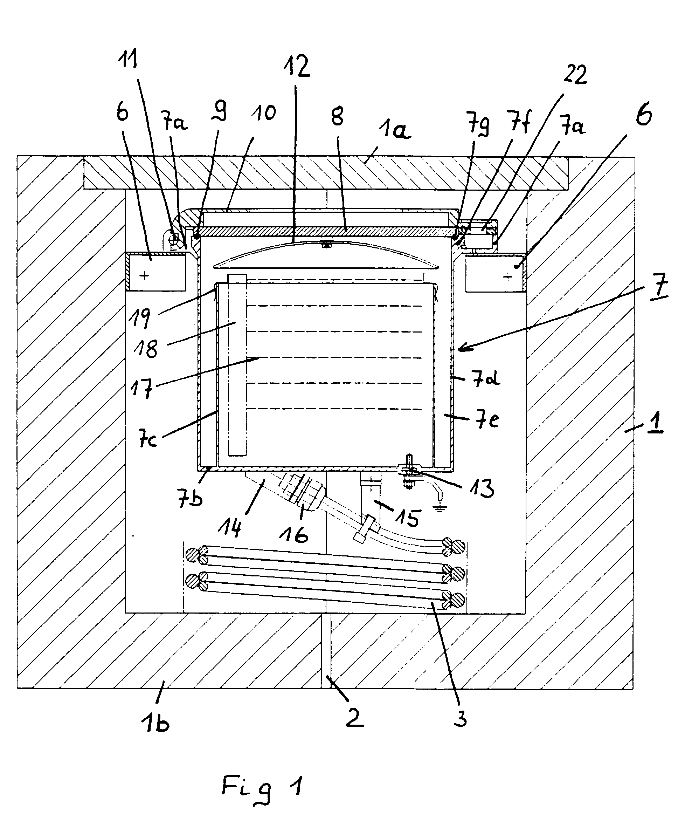

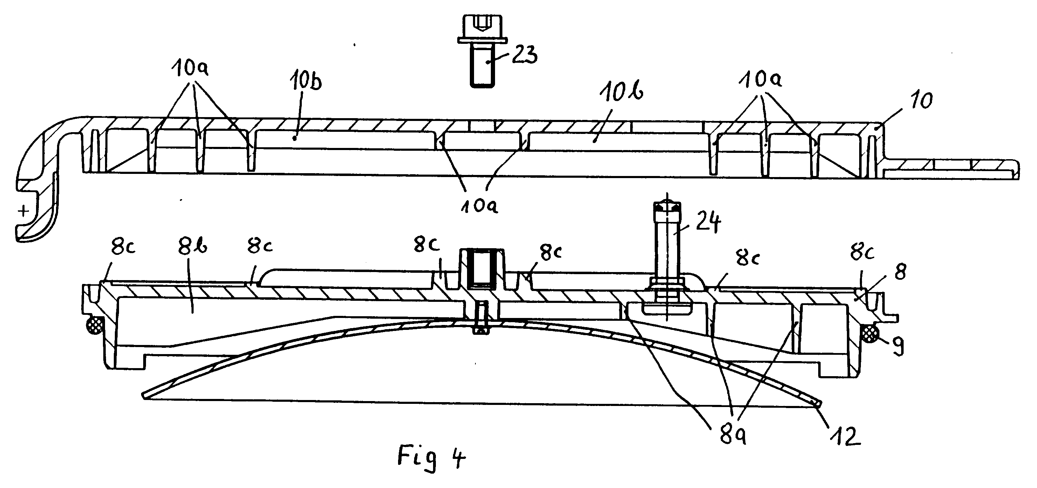

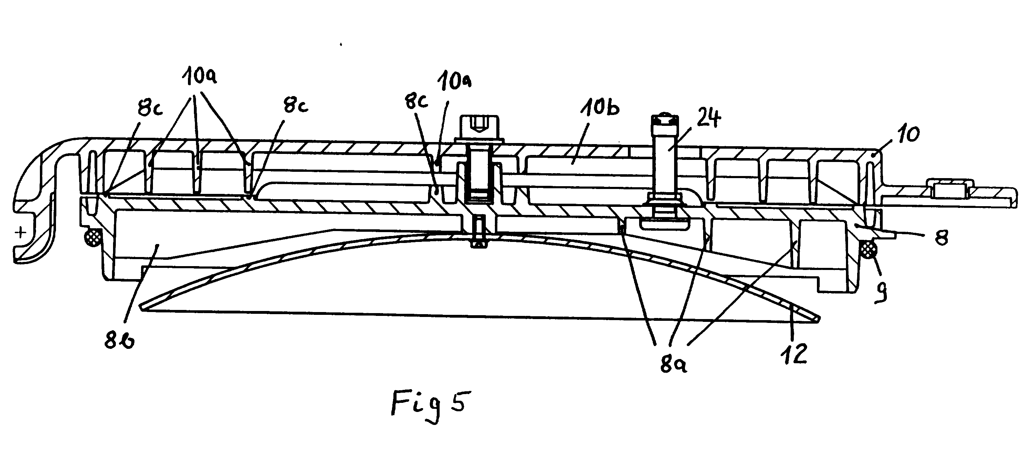

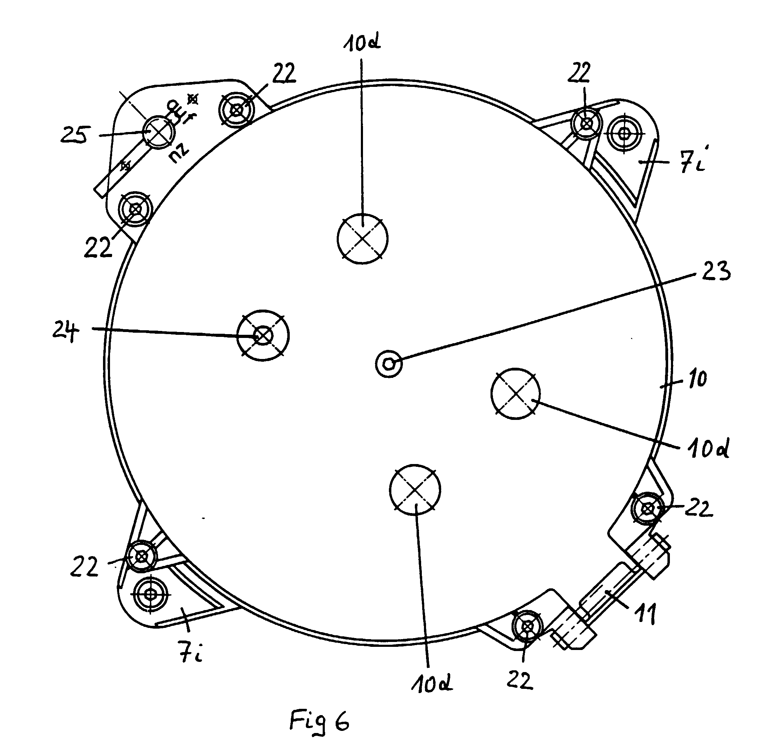

Ausführungsbeispiele der Erfindung sind anhand der Figuren 1 bis 6 näher beschrieben.

Die Figur 1 zeigt einen seitlichen Schnitt durch den Unterflurbehälter nach der Lehre der Erfindung. Mit 1 ist ein mechanisch stabiles Gehäuse, z.B. ein Betonschacht, bezeichnet, der z.B. im Gehwegbereich im Erdreich eingegraben wird. Der Betonschacht 1 kann einen kreisrunden Querschnitt, z.B. aus Ringen aufgebaut, oder einen quadratischen Querschnitt, z.B. aus Platten aufgebaut, aufweisen. Im Boden 1b des Schachtes 1 ist eine Sickeröffnung 2 zum Ableiten eventuell eingedrungenen Wassers. In der Wand des Betonschachtes 1 ist eine nicht näher dargestellte Kabeleinführungsöffnung vorgesehen, mittels welcher das Kabel 3 zugentlastet und feuchtigkeitsdicht in das Innere des Schachtes 1 eingeführt werden kann. Sollen weitere Kabel in den Schacht 1 eingeführt werden, sind entsprechend weitere Kabeleinführungsöffnungen vorgesehen. Die Kabel 3 werden vorzugsweise mit sogenannten PG-Verschraubungen in den Kabeleinführungsöffnungen festgelegt.

Im Bereich der Wandungen des Betonschachtes 1 sind Auflager 6 vorgesehen, welche den Behälter 7 tragen. Ein Gehäusedeckel 1a aus Gußeisen schließt den Schacht 1 gegen Spritzwasser ab. Der Behälter 7 ist mittels Laschen 7a auf die Auflager 6 aufgelegt und in nicht näher beschriebener Weise mit diesen verschraubt.

Der Behälter 7 besteht aus einem topfartig geformten Kunststoffteil mit Boden 7b und einem zylinderförmigen Einsatz 7c, der mit der Außenwandung 7d des topfartigen Kunststoffteils einen Ringspalt 7e bildet. Die obere Berandung des Kunststoffteils weist eine umlaufende Verdickung 7f mit einer umlaufenden Nut 7g auf. Der Behälter 7, d.h. Boden 7b, zylinderförmiger Einsatz 7c, Außenwandung 7d, sowie die Verdickung 7f bilden ein Bauteil, welches in vorteilhafter Weise durch Spritzgießen aus einem geeigneten Kunststoff hergestellt ist.

Den Abschluß des Behälters 7 bildet ein Behälterdeckel 8, vorzugsweise aus Kunststoff, der auf der Verdickung 7f aufliegt und die Öffnung des Behälters 7 mittels einer in die Nut 7g eingelegten Dichtung 9 flüssigkeitsdicht verschließt. Ein Verschlußring 10 übt im geschlossenen Zustand ständig einen Druck auf den Behälterdeckel 8 und die Dichtung 9 aus. Hierzu ist der Verschlußring 10 in einem Lager 11 schwenkbar gelagert und im geschwenkten Zustand heraushebbar. Das freie Ende des Verschlußringes 10 ist bei 22 mit dem Behälter verschraubt. Da der Verschlußring 10 Kraft auf die Dichtung 9 ausüben soll, muß er bei den erforderlichen Kräften verwindungssteif ausgebildet sein. Als Werkstoff wird vorzugsweise ein faserverstärkter Kunststoff, z.B. glasfaserverstärktes Polyamid verwendet. Der Verschlußring 10 hat darüber hinaus noch die Aufgabe, den Behälter 7 gegen unbefugten Zugriff zu schützen. Hierzu ist im Bereich 22 ein nicht dargestelltes Schloß vorgesehen, welches nur geschlossen werden kann, wenn die Verschraubung des Verschlußrings 10 bis zum Anschlag erfolgt ist. Für eine optimale Abdichtung ist es von Vorteil, wenn die Verschraubung von Verschlußring 10 und Behälter 7 an mehreren Stellen, zweckmäßigerweise im Bereich der Laschen 7a, erfolgt. Wenn alle Schrauben bis zum Anschlag angezogen sind, ist eine gleichmäßige über den Umfang verteilte Belastung der Dichtung 9 und gleichzeitig eine Entlastung des Schlosses gewährleistet.

An der Unterseite des Behälterdeckels 8 ist ein gewölbter Schirm 12 vorgesehen, der von dem Behälterdeckel 8 abtropfendes Kondensat auffängt und in den Ringspalt 7e ableitet.

Im Boden 7b des Behälters 7 befindet sich noch eine metallische Durchführung 13, die mit einer in der Wandung des Betonschachtes 1 vorzusehenden metallischen Durchführung und einem Erdspieß in nicht näher dargestellter Weise verbunden ist.

Weiterhin sind in Boden 7b des Behälters 7 mehrere Kabeleinführungen 14 vorgesehen, durch welche die Kabel flüssigkeitsdicht in das Innere des Behälters 7 geführt sind. Am Behälterboden 7b befestigte Kabelabfangungen 15 legen das Kabel fest und sorgen für eine Trennung der Funktionen Abdichten - Abfangen. Die Abdichtung erfolgt mit einer an sich bekannten PG-Verschraubung 16 bzw. mit einem an sich bekannten Schrumpfschlauch.

Als fernmeldetechnische Einrichtungen werden bei der Erfindung vorzugsweise elektronische Bauteile eingesetzt. Die Bauteile sind auf sogenannten Baugruppenträgern 17 angeordnet. Die Baugruppenträger 17 sind an einem Halter 18 befestigt. Mittels Federn 19 sind Halter 18 und Baugruppenträger 17 herausnehmbar auf die Oberkante des zylindrischen Einsatzes 7c aufgesteckt.

Bei den fernmeldetechnischen Einrichtungen handelt es sich insbesondere um solche, welche über optische Kabel herangeführte Lichtsignale in elektrische Signale umwandeln, d.h. die eingehenden Kabel sind optische Kabel, die ausgehenden Kabel sind herkömmliche Kupferkabel. Ein Versorgungskabel versorgt die elektronischen Bauteile mit Energie. Diese Kabel können in geeigneter Weise auch zu einem Hybridkabel zusammengefaßt werden.

In dem Ringspalt 7e ist eine so große Vorratslänge der Kabel vorhanden, daß nach dem Öffnen des Behälterdeckels 8 der Halter 18 mit dem Baugruppenträger 17 zu Montagezwecken entnommen und wieder eingesetzt werden kann.

Zur verbesserten Abführung der von den Bauteilen erzeugten Verlustleistung ist es von Vorteil, wenn der Behälterdeckel 8 aus Metall besteht und nicht dargestellte Kühlrippen aufweist.

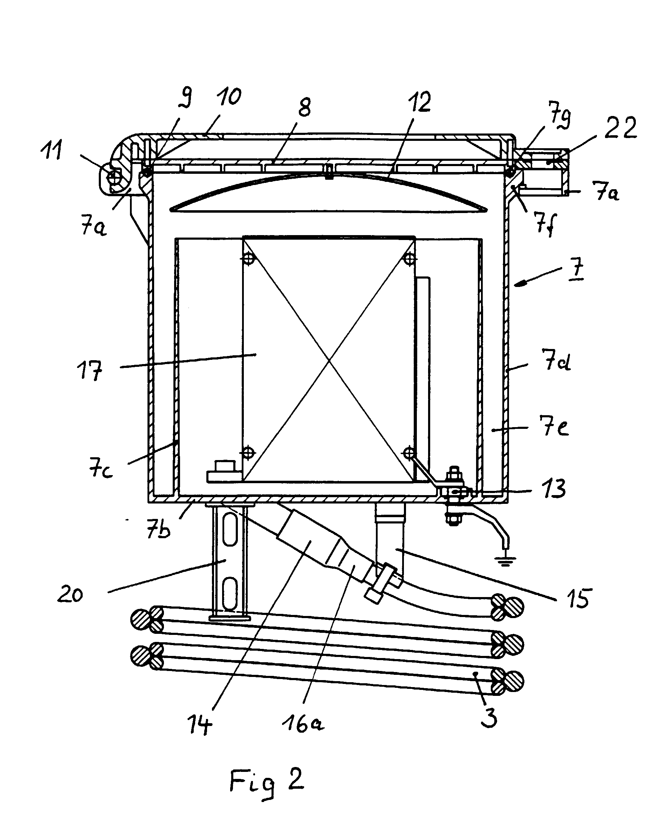

Die Figur 2 zeigt den Behälter 7 in vergrößerter Darstellung. Unterschiedlich gegenüber dem in Figur 1 gezeigten Behälter 7 ist die Abdichtung der eingeführten Kabel 3. Hier ist ein Schrumpfschlauch 16a dargestellt. Der Behälterdeckel 8 weist eine Vielzahl von Verstärkungsrippen 8a auf, die zu einer Materialersparnis führen. Der Baugruppenträger 17 ist auf dem oberen Rand des zylindrischen Einsatzes 7c eingehängt. Die die elektronischen Bauteile und die Schaltungen aufweisenden nicht näher bezeichneten Platinen sind in den Baugruppenträger 17 einsteckbar.

Der Behälter 7 kann aus dem Betonschacht 1 für Montagearbeiten herausgehoben und abgesetzt werden. Zum Abstellen dienen mindestens drei Standfüße 20, von denen der Deutlichkeit halber nur einer dargestellt ist.

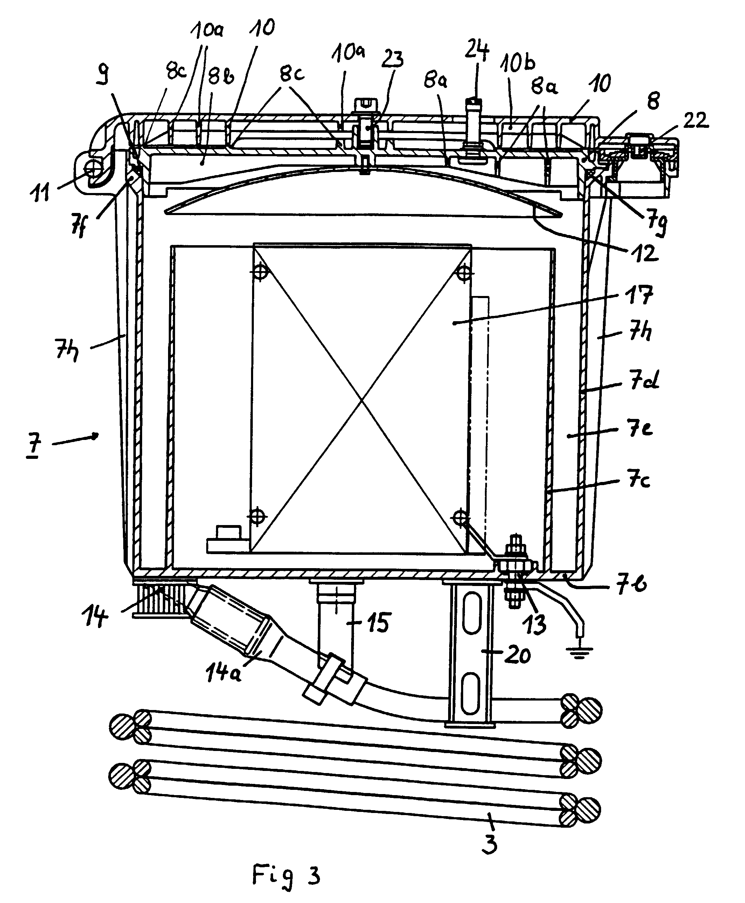

In der Figur 3 ist eine alternative Lösung für den Behälter 7 dargestellt. Der Behälter 7 ist ein topfartig geformtes Spritzgießteil aus Kunststoff, vorzugsweise Polypropylen. Die obere Berandung des Spritzgießteils weist eine umlaufende Verdickung 7f mit einer Abschrägung 7g auf. An der Außenwandung sind mehrere über den Umfang gleichmäßig verteilte in längsaxialer Richtung verlaufende Rippen 7h vorgesehen, deren Höhe zum Boden 7b hin abnimmt.

Den Abschluß des Behälters 7 bildet der Behälterdeckel 8, der auf der Verdickung 7f aufliegt und die Öffnung des Behälters 7 mittels einer in der Abschrägung 7g eingelegten Dichtung 9 flüssigkeitsdicht und gasdicht verschließt.

Sowohl der Behälterdeckel 8 als auch der Verschlußring 10 sind als Spritzgußteile aus Kunststoff hergestellt, wobei für den Behälterdeckel 8 Polypropylen und für den Verschlußring 10 Polyamid bevorzugt werden.

Die geerdete metallische Durchführung 13 ist mit den nachrichtentechnischen Einrichtungen 17 leitend verbunden.

Die für die Versorgung der nachrichtentechnischen Bauteile 17 erforderlichen Kabel 3 werden durch die Kabeleinführung 14 in das Behälterinnere eingeführt, d. h. nicht die Kabel 3 selbst sondern die von der Kabelummantelung befreiten Adern, die in dem Ringspalt 7e bevorratet werden. Die Abdichtung der Einführung 14 gegenüber dem Kabel 3 erfolgt durch einen Schrumpfschlauch 14a. Das Kabel 3 wird mittels der am Behälterboden 7b befestigten Kabelabfangung 15 gehalten. Falls Arbeiten an den nachrichtentechnischen Bauteilen 17 erforderlich werden, werden die Verschlußschrauben 22 gelöst, der Verschlußring 10 und der Behälterdeckel 8 abgenommen. Die Bauteile 17 können dann entnommen werden, wobei ebenfalls die Adervorräte aus dem Ringspalt 7e entnommen werden.

Eine wesentliche Anforderung an den Behälter 7 ist, daß dieser im Einbauzustand gegen Eindringen von Wasser dicht ist. Hierzu ist vorgeschrieben, daß nach dem Zusammenbau des Behälters 7 im Innern ein Prüfdruck von 0,02 bis 0,5 bar vorzugsweise 0,1 bar aufgebaut wird. Die Naht zwischen Behälter 7 und Deckelsystem wird dabei, wie an sich bekannt, mit einer Seifenlösung eingesprüht und auf Blasenbildung bzw. mit einem Gasdetektor überprüft.

Damit der Behälterdeckel 8 diesem Druck standhalten kann, ist dieser an der nach innen weisenden Oberfläche mit konzentrischen Rippen 8a sowie radial verlaufenden Rippen 8b verstärkt. Zusätzlich befinden sich noch weitere konzentrische Rippen 8c an der nach außen weisenden Oberfläche des Behälterdeckels 8.

Desgleichen sind konzentrische Rippen 10a und radial verlaufende Rippen 10b am Verschlußring 10 vorgesehen. Mittels eines Schraubbolzens 23 sind der Verschlußring 10 und der Behälterdeckel 8 miteinander verschraubt, so daß sie eine Einheit bilden, in welcher die Rippen 10a und 10b den Behälterdeckel 8 gegen Verformung schützen. Für das Aufbringen des Prüfdrucks im Behälterinnern ist in den Behälterdeckel 8 ein Ventil 24 druckdicht eingesetzt.

Die Höhe der im Verschlußring 10 vorgesehenen konzentrischen Rippen 10a nimmt zur Mitte hin ab und zwar um jeweils 0,1 mm. Hierdurch wird erreicht, daß beim Verspannen von Behälterdeckel 8 und Verschlußring 10 auch bei einer Durchbiegung des Behälterdeckels 8 der Druck der Rippen 10a auf den Behälterdeckel 8 gleich verteilt wird und nicht die innerste Rippe den höchsten Druck überträgt.

Der Schraubbolzen 23 ist in einem nicht näher bezeichneten Gewindeeinsatz im Behälterdeckel 8 geführt.

Die Figur 4 zeigt den Behälterdeckel 8 und den Verschlußring 10 gegenüber Fig. 3 vergrößert im noch nicht montierten Zustand.

Die Figur 5 zeigt das Behälterdeckelsystem im montierten Zustand.

Die Figur 6 zeigt eine Draufsicht auf den Verschlußring 10. Hier sind mit 7i an dem Behälter 7 angeformte Laschen bezeichnet, mit deren Hilfe der Behälter 7 in den Unterflurbehälter eingehängt und dort festgeschraubt werden kann.

10d sind Öffnungen im Verschlußring 10, die für eine gute Luftzirkulation und damit für eine verbesserte Wärmeabfuhr sorgen. Darüber hinaus gestatten diese Öffnungen 10d, daß das Ventil 24 durch den Verschlußring 10 hindurchgeführt werden kann bzw. von außen zugänglich ist. Weiterhin dienen die Öffnungen 10d zum Greifen des Verschlußringes 10 beim Öffnen.

Der Verschlußring 10 ist mit dem Behälter 7 an mehreren Stellen verschraubt, um einen gleichmäßigen Druck auf den Behälterdeckel 8 und damit auf den Dichtring 9 auszuüben. Die Schraubbolzen 22 sitzen sowohl im Bereich des Lagers 11 als auch an der gegenüberliegenden Seite im Bereich der Verriegelung und im Bereich der Laschen 7i. Als Verriegelungselement dient ein Drehgriff 25, der in an sich bekannter Weise mit einem Schloß versehen sein kann.

## Patentansprüche

1. Gehäuse in Unterflurausführung für fernmeldetechnische Geräte, bestehend aus einem mechanisch stabilen Gehäuse (1), welches mit einem abnehmbaren Gehäusedeckel (1a) verschlossen ist und einer innerhalb des stabilen Gehäuses (1) angeordneten Einrichtung (7), welche zumindest ein fernmeldetechnisches Gerät trägt,
gekennzeichnet durch folgende Merkmale
a) die die fernmeldetechnischen Geräte (17,18) tragende Einrichtung ist ein einen Behälterboden (7b) und eine Behälteraußenwand (7d) aufweisender topfartiger Behälter (7) mit einem zylindrischen Einsatz (7c), der unter Bildung eines Spaltes (7e) zwischen der Behälteraußenwand (7d) und dem Einsatz (7c) in dem topfartigen Behälter (7) angeordnet ist
b) der Behälter (7) ist mit einem abnehmbaren Behälterdeckel (8,10) feuchtigkeitsdicht verschlossen
c) die fernmeldetechnischen Geräte (17,18) sind in dem zylindrischen Einsatz (7c) angeordnet.

2. Gehäuse nach Anspruch 1, dadurch gekennzeichnet, daß das stabile Gehäuse (1) ein Betonschacht mit einem gußeisernen Gehäusedeckel (1a) ist.

3. Gehäuse nach Anspruch 1 oder 2, dadurch gekennzeichnet, daß im Boden (1b) des stabilen Gehäuses (1) zumindest eine Sickeröffnung (2) vorgesehen ist.

4. Gehäuse nach einem der Ansprüche 1 bis 3, dadurch gekennzeichnet, daß der Behälter (7) zylindrisch ist und von daher der Spalt (7e) zwischen der Behälteraußenwand (7d) und dem zylindrischen Einsatz (7c) ein Ringspalt (7e) ist.

5. Gehäuse nach einem der Ansprüche 1 bis 4, dadurch gekennzeichnet, daß die Behälterwand (7d), der Behälterboden (7b) und der zylindrische Einsatz (7c) gemeinsam als ein Spritzgußteil aus Kunststoff gefertigt sind.

6. Gehäuse nach einem der Ansprüche 1 bis 5, dadurch gekennzeichnet, daß im Boden (7b) des Behälters (7) Kabeleinführungen (14) vorgesehen sind, die zum druckdichten Einführen der Kabel (3) in den Spalt (7e) geeignet sind.

7. Gehäuse nach einem der Ansprüche 1 bis 6, dadurch gekennzeichnet, daß am Boden (7b) des Behälters (7) eine Kabelabfangung (15) befestigt ist.

8. Gehäuse nach einem der Ansprüche 1 bis 7, dadurch gekennzeichnet, daß im Boden (7b) des Behälters (7) eine metallische Durchführung (13) vorgesehen ist, an welche alle im Innern des Behälters (7) befindlichen elektrisch leitenden Teile anlegbar sind und welche mit einer metallischen Durchführung im Gehäuse elektrisch leitend verbunden ist.

9. Gehäuse nach einem der Ansprüche 1 bis 8, dadurch gekennzeichnet, daß der Behälter (7) mit einem aus Behälterdeckel (8), Verschlußring (10) und Runddichtung (9) bestehenden Behälterdeckelsystem verschlossen ist.

10. Gehäuse nach Anspruch 9, dadurch gekennzeichnet, daß die Runddichtung (9) in einer Nut (7g) gelegen ist, die in einer die Wanddicke des Behälters (7) vergrößernden oberen Berandung befindlich ist.

11. Gehäuse nach Anspruch 9 oder 10, dadurch gekennzeichnet, daß der Verschlußring (10) in einem Lager (11) schwenkbar gelagert ist und an der dem Lager (11) gegenüberliegenden Seite mit dem Behälter (7) verschraubt ist, wobei der Verschlußring (10) auf den Behälterdeckel (8) und dieser auf die Ringdichtung (9) drückt.

12. Gehäuse nach einem der Ansprüche 1 bis 11, dadurch gekennzeichnet, daß am oberen Rand des Behälters (7) mindestens drei Laschen (7a) angeformt sind, die auf Auflagern (6) des Gehäuses (1) aufliegen.

13. Gehäuse nach Anspruch 12, dadurch gekennzeichnet, daß der Behälter (7) mit dem Gehäuse (1) dadurch fest verbunden ist, daß die Laschen (7a) mit den Auflagern (6) verschraubt sind.

14. Gehäuse nach einem der Ansprüche 1 bis 13, dadurch gekennzeichnet, daß an der nach innen weisenden Oberfläche des Behälterdeckels (8) ein gewölbter Schirm (12) angebracht ist, der über den Rand des zylindrischen Einsatzes (7c) hinausragt.

15. Gehäuse nach einem der Ansprüche 1 bis 14, dadurch gekennzeichnet, daß die fernmeldetechnischen Geräte Baugruppenträger (17) sind und die Baugruppenträger (17) in die Wand des zylinderförmigen Einsatzes (7c) eingehängt sind.

16. Gehäuse nach einem der Ansprüche 9 oder 10 gekennzeichnet durch folgende Merkmale:
a) der Behälterdeckel (8) besteht aus Kunststoff und weist mehrere konzentrisch zueinander verlaufende Rippen (8a,8c) auf,
b) der Behälterdeckel (8) weist mehrere radial verlaufende Rippen (8b) auf,
c) der Verschlußring (10) besteht aus Kunststoff und weist mehrere konzentrisch zueinander verlaufende Rippen (10a) auf,
d) der Verschlußring (10) weist mehrere radial verlaufende Rippen (10b) auf und
e) Behälterdeckel (8) und Verschlußring (10) sind miteinander verschraubt.

17. Gehäuse nach Anspruch 16, dadurch gekennzeichnet, daß die Rippen (8a,8b) im Behälterdeckel (8) in das Behälterinnere weisen.

18. Gehäuse nach Anspruch 16 oder 17, dadurch gekennzeichnet, daß jeweils konzentrisch und radial verlaufende Rippen (8c) an der dem Verschlußring (10) zugekehrten Oberfläche des Behälterdeckels (8) vorgesehen sind.

19. Gehäuse nach einem der Ansprüche 16 bis 18, dadurch gekennzeichnet, daß die Rippen (10a,10b) im Verschlußring (10) zum Behälterdeckel (8) hinweisen.

20. Gehäuse nach einem der Ansprüche 16 bis 19, dadurch gekennzeichnet, daß im Zentrum des Behälterdeckels (8) eine festliegende Schraubbuchse vorgesehen ist, in welche ein durch eine zentrale Bohrung im Verschlußring (10) hindurchgeführter Schraubbolzen (23) eingeschraubt ist.

21. Gehäuse nach einem der Ansprüche 16 bis 20, dadurch gekennzeichnet, daß im Behälterdeckel (8) ein Ventil (24) dichtend eingesetzt ist, welches durch eine im Verschlußring (10) vorgesehene Öffnung hindurchragt.

22. Gehäuse nach einem der Ansprüche 16 bis 21, dadurch gekennzeichnet, daß die Höhe der konzentrisch verlaufenden Rippen (10a) im Verschlußring (10) von außen nach innen abnimmt und die Rippen (10a) sich im gespannten Zustand vom Behälterdeckel (8) und Verschlußring (10) auf der äußeren Behälterdeckeloberfläche abstützen.

23. Gehäuse nach einem der Ansprüche 16 bis 22, dadurch gekennzeichnet, daß der Behälter (7) an seiner äußeren Oberfläche mehrere über den Umfang verteilt angeordnete in Längsrichtung des Behälters (7) verlaufende Verstärkungsrippen (7h) aufweist.

24. Gehäuse nach Anspruch 23, dadurch gekennzeichnet, daß die Höhe der Verstärkungsrippen (7h) vom Behälterrand (7f) zum Behälterboden (7b) hin abnimmt.

25. Gehäuse nach einem der Ansprüche 16 bis 24, dadurch gekennzeichnet, daß das Behälterdeckelsystem an mehreren über den Umfang verteilt angeordneten Stellen (22) mit der oberen Berandung des Behälters (7) verschraubt ist.

## Claims

1. Housing of underground design for telecommunications equipment, consisting of a mechanically stable housing (1) that is closed with a removable housing cover (1a) and of a device (7) that is arranged within the stable housing (1) and that carries at least one piece of telecommunications equipment, characterised by the following features
a) the device carrying the telecommunications equipment (17, 18) is a pot-like container (7) comprising a container base (7b) and an outer container wall (7d) and having a cylindrical insert (7c) which is arranged in the pot-like container (7), forming a gap (7e) between the outer container wall (7d) and the insert (7c)
b) the container (7) is closed is moisture-tight manner with a removable container cover (8, 10)
c) the telecommunications equipment (17, 18) is arranged in the cylindrical insert (7c).

2. Housing according to Claim 1, characterised in that the stable housing (1) is a concrete shaft with a cast-iron housing cover (1a).

3. Housing according to Claim 1 or 2, characterised in that at least one seepage opening (2) is provided in the base (1b) of the stable housing (1).

4. Housing according to one of Claims 1 to 3,
characterised in that the container (7) is cylindrical and hence the gap (7e) between the outer container wall (7d) and the cylindrical insert (7c) is an annular gap (7e).

5. Housing according to one of Claims 1 to 4,
characterised in that the container wall (7d), the container base (7b) and the cylindrical insert (7c) are produced jointly from plastic as an injection-moulded part.

6. Housing according to one of Claims 1 to 5,
characterised in that cable inlets (14) are provided in the base (7b) of the container (7) that are suitable for pressure-tight introduction of the cables (3) into the gap (7e).

7. Housing according to one of Claims 1 to 6,
characterised in that a cable clamp (15) is secured to the base (7b) of the container (7).

8. Housing according to one of Claims 1 to 7,
characterised in that a metallic bushing (13) is provided in the base (7b) of the container (7), onto which bushing all the electrically conductive parts located inside the container (7) are capable of being applied and which is connected in electrically conductive manner to a metallic bushing in the housing.

9. Housing according to one of Claims 1 to 8,
characterised in that the container (7) is closed with a container-cover system consisting of container cover (8), locking ring (10) and O-ring seal (9).

10. Housing according to Claim 9, characterised in that the O-ring seal (9) is placed in a groove (7g) located in an upper rim enlarging the wall thickness of the container (7).

11. Housing according to Claim 9 or 10, characterised in that the locking ring (10) is supported in a bearing (11) so as to be capable of swivelling and is screwed to the container (7) on the side located opposite the bearing (11), whereby the locking ring (10) presses on the container cover (8) and the latter presses on the ring seal (9).

12. Housing according to one of Claims 1 to 11,
characterised in that at least three brackets (7a) are moulded onto the upper edge of the container (7), said brackets resting on supports (6) pertaining to the housing (1).

13. Housing according to Claim 12, characterised in that the container (7) is firmly connected to the housing (1) by the brackets (7a) being screwed to the supports (6).

14. Housing according to one of Claims 1 to 13,
characterised in that a domed screen (12) is attached to the surface of the container cover (8) pointing inwards, said domed screen protruding beyond the edge of the cylindrical insert (7c).

15. Housing according to one of Claims 1 to 14,
characterised in that the telecommunications equipment is constituted by subracks (17) and the subracks (17) are let down into the wall of the cylindrical insert (7c).

16. Housing according to one of Claims 1 to 10,
characterised by the following features:
a) the container cover (8) consists of plastic and comprises several ribs (8a, 8c) extending concentrically with respect to one another,
b) the container cover (8) comprises several radially extending ribs (8b),
c) the locking ring (10) consists of plastic and comprises several ribs (10a) extending concentrically with respect to one another,
d) the locking ring (10) comprises several radially extending ribs (10b) and
e) container cover (8) and locking ring (10) are screwed to one another.

17. Housing according to Claim 16, characterised in that the ribs (8a, 8b) in the container cover (8) point into the interior of the container.

18. Housing according to Claim 16 or 17, characterised in that ribs (8c) each extending concentrically and radially are provided on the surface of the container cover (8) facing the locking ring (10).

19. Housing according to one of Claims 16 to 18,
characterised in that the ribs (10a, 10b) in the locking ring (10) point towards the container cover (8).

20. Housing according to one of Claims 16 to 19,
characterised in that in the centre of the container cover (8) a fixed screw bush is provided, into which a screw bolt (23) is screwed that is passed through a central bore in the locking ring (10).

21. Housing according to one of Claims 16 to 20,
characterised in that in the container cover (8) a valve (24) is inserted in sealing manner which protrudes through an opening provided in the locking ring (10).

22. Housing according to one of Claims 16 to 21,
characterised in that the height of the concentrically extending ribs (10a) in the locking ring (10) decreases from the outside towards the inside and in the tightened state of the container cover (8) and the locking ring (10) the ribs (10a) are supported on the outer surface of the container cover.

23. Housing according to one of Claims 16 to 22,
characterised in that the container (7) comprises on its outer surface several reinforcing ribs (7h) extending in the longitudinal direction of the container (7) and arranged distributed over the periphery.

24. Housing according to Claim 23, characterised in that the height of the reinforcing ribs (7h) decreases from the container edge (7f) towards the container base (7b).

25. Housing according to one of Claims 16 to 24,
characterised in that the container-cover system is screwed to the upper rim of the container (7) at several places (22) which are arranged distributed over the periphery.

## Revendications

1. Gaine encastrée dans le sol pour composants de télécommunication, comprenant une gaine (1) mécaniquement stable, qui est fermée par un couvercle (1a), et un dispositif (7) monté à l'intérieur de la gaine (1) stable, lequel dispositif porte au moins un composant de télécommunication, caractérisée par les caractéristiques suivantes :
a) le dispositif qui porte les composants de télécommunication (17, 18) est un conteneur (7) en forme de pot, comprenant un fond (7b) et une paroi extérieure (7d) et muni d'une cage cylindrique (7c), qui est disposée dans le conteneur (7) en forme de pot de manière à former une fente (7e) entre la paroi extérieure (7d) et la cage (7c),
b) le conteneur (7) est fermé par un couvercle (8, 10) amovible étanche à l'humidité,
c) les composants de télécommunication (17, 18) sont montés dans la cage cylindrique (7c).

2. Gaine selon la revendication 1, caractérisée en ce que la gaine (1) stable est une gaine en béton avec un couvercle (1a) en fonte.

3. Gaine selon la revendication 1 ou 2, caractérisée en ce qu'il est prévu de réaliser dans le fond (1b) de la gaine (1) stable au moins un orifice de drainage (2).

4. Gaine selon l'une quelconque des revendications 1 à 3, caractérisée en ce que le conteneur (7) est cylindrique et, de ce fait, la fente (7e) entre la paroi extérieure du conteneur (7d) et la cage cylindrique (7c) est une fente annulaire (7e).

5. Gaine selon l'une quelconque des revendications 1 à 4, caractérisée en ce que la paroi du conteneur (7d), le fond du conteneur (7b) et la cage cylindrique (7c) ont été réalisés ensemble dans une matière plastique selon un procédé de moulage par injection.

6. Gaine selon l'une quelconque des revendications 1 à 5, caractérisée en ce qu'il est prévu de réaliser des entrées pour câbles (14) dans le fond (7b) du conteneur (7), qui sont destinées à assurer le passage étanche des câbles (3) dans la fente (7e).

7. Gaine selon l'une quelconque des revendications 1 à 6, caractérisée en ce qu'un système de maintien des câbles (15) est fixé contre le fond (7b) du conteneur (7).

8. Gaine selon l'une quelconque des revendications 1 à 7, caractérisée en ce qu'il est prévu de réaliser une douille de traversée (13) métallique dans le fond (7b) du conteneur (7), contre laquelle peuvent être raccordées toutes les pièces conductrices électriques situées à l'intérieur du conteneur (7) et laquelle est reliée pour conduire l'électricité à une douille de traversée métallique montée dans la gaine.

9. Gaine selon l'une quelconque des revendications 1 à 8, caractérisée en ce que le conteneur (7) est fermé par un système de fermeture du conteneur comprenant un couvercle (8), une couronne de fermeture (10) et un joint torique d'étanchéité (9).

10. Gaine selon la revendication 9, caractérisée en ce que le joint torique d'étanchéité (9) est posé dans une rainure (7g), qui est réalisée dans un bord supérieur augmentant l'épaisseur de la paroi du conteneur (7).

11. Gaine selon la revendication 9 ou 10, caractérisée en ce que la couronne de fermeture (10) est posée dans un logement (11) de manière à pouvoir pivoter et est vissée contre le conteneur (7) sur le côté opposé au logement (11), la couronne de fermeture (10) appuyant sur le couvercle du conteneur (8) et celui-ci appuyant sur le joint torique d'étanchéité (9).

12. Gaine selon l'une quelconque des revendications 1 à 11, caractérisée en ce qu'au moins trois languettes (7a) sont formées contre le bord supérieur du conteneur (7), lesquelles reposent sur des supports (6) de la gaine (1).

13. Gaine selon la revendication 12, caractérisée en ce que le conteneur (7) est assemblé fermement dans la gaine (1) du fait que les languettes (7a) sont vissées contre les supports (6).

14. Gaine selon l'une quelconque des revendications 1 à 13, caractérisée en ce qu'un écran cintré (12) est monté contre la face du couvercle du conteneur (8), orientée vers l'intérieur, lequel écran s'avance au-delà du bord de la cage cylindrique (7c).

15. Gaine selon l'une quelconque des revendications 1 à 14, caractérisée en ce que les composants de télécommunication sont des porte-composants (17) et les porte-composants (17) sont suspendus contre la paroi de la cage cylindrique (7c).

16. Gaine selon l'une quelconque des revendications 1 à 10, caractérisée par les caractéristiques suivantes :
a) le couvercle du conteneur (8) est en matière plastique et comporte plusieurs nervures (8a, 8c) concentriques les unes aux autres,
b) le couvercle du conteneur (8) comporte plusieurs nervures (8b) orientées dans le sens radial,
c) la couronne de fermeture (10) est en matière plastique et comporte plusieurs nervures (10a) concentriques les unes aux autres,
d) la couronne de fermeture (10) comporte plusieurs nervures (10b) orientées dans le sens radial,
e) le couvercle du conteneur (8) et la couronne de fermeture (10) sont vissés l'un contre l'autre.

17. Gaine selon la revendication 16, caractérisée en ce que les nervures (8a, 8b) sur le couvercle du conteneur (8) sont orientées vers l'intérieur du conteneur.

18. Gaine selon la revendication 16 ou 17, caractérisée en ce qu'il est prévu de réaliser sur la face du couvercle du conteneur (8) orientée vers la couronne de fermeture (10) des nervures (8c) respectivement concentriques et orientées dans le sens radial.

19. Gaine selon l'une quelconque des revendications 16 à 18, caractérisée en ce que les nervures (10a, 10b) sur la couronne de fermeture (10) sont orientées vers le couvercle du conteneur (8).

20. Gaine selon l'une quelconque des revendications 16 à 19, caractérisée en ce qu'il est prévu de monter au centre du couvercle du conteneur (8) une douille taraudée fixe, dans laquelle sera vissé un boulon fileté (23) traversant une forure centrale réalisée dans la couronne de fermeture (10).

21. Gaine selon l'une quelconque des revendications 16 à 20, caractérisée en ce qu'une soupape (24) est insérée de manière étanche dans le couvercle du conteneur (8), laquelle soupape traverse un orifice prévu dans la couronne de fermeture (10).

22. Gaine selon l'une quelconque des revendications 16 à 21, caractérisée en ce que la hauteur des nervures concentriques (10a) sur la couronne de fermeture (10) diminue de l'extérieur vers l'intérieur et, lorsque le couvercle du conteneur (8) et la couronne de fermeture (10) sont mis sous tension, les nervures (10a) s'appuient contre la face extérieure du couvercle du conteneur.

23. Gaine selon l'une quelconque des revendications 16 à 22, caractérisée en ce que la face extérieure du conteneur (7) comporte plusieurs nervures de renforcement (7h), réparties sur tout le pourtour et orientées dans le sens longitudinal du conteneur (7).

24. Gaine selon la revendication 23, caractérisée en ce que la hauteur des nervures de renforcement (7h) diminue du bord du conteneur (7f) vers le fond du conteneur (7b).

25. Gaine selon l'une quelconque des revendications 16 à 24, caractérisée en ce que le système de fermeture du conteneur est vissé contre le bord supérieur du conteneur (7) en plusieurs points (22) répartis sur tout le pourtour.
